# EUROPÄISCHE PATENTSCHRIFT

(11) **EP 3 359 298 B1**
(45) Veröffentlichungstag und Bekanntmachung des Hinweises auf die Patenterteilung: **28.08.2019**
(21) Anmeldenummer: 16775260.9
(22) Anmeldetag: 04.10.2016
(51) Int. Cl.: B05B 11/00

(54) **SPENDER FÜR INSBESONDERE FLÜSSIGE BIS PASTÖSE MASSEN**
DISPENSER OF LIQUID OR PASTY PRODUCTS
DISTRIBUTEUR DE PRODUIT LIQUIDE OU PÂTEUX

(30) Priorität: 07.10.2015 DE 102015117127; 01.04.2016 DE 102016106017
(43) Veröffentlichungstag der Anmeldung: 15.08.2018
(73) Patentinhaber: RPC Bramlage GmbH, 49393 Lohne (DE)
(72) Erfinder: PRESCHE, Martin, 49413 Dinklage (DE)
(74) Vertreter: Müller, Enno
(86) Internationale Anmeldenummer: PCT/EP2016/073648
(87) Internationale Veröffentlichungsnummer: WO 2017/060227

(56) Entgegenhaltungen:
- EP-A1- 0 864 371
- WO-A1-85/02563
- WO-A1-2004/016517
- WO-A1-2006/031110
- WO-A2-2007/104561
- WO-A2-2012/168916
- JP-B2- 3 566 817
- US-A- 3 889 628
- US-A- 4 201 317
- US-A- 5 351 863
- US-A1- 2005 011 913

## Beschreibung

### Gebiet der Technik

Die Erfindung betrifft zunächst einen Spender nach den Merkmalen des Oberbegriffes des Anspruches 1.

### Stand der Technik

Spender der in Rede stehenden Art sind bekannt. Diese dienen bspw. der Ausgabe von Lotionen oder Cremes.
Aus der US 3,889,628 A ist ein Spender bekannt, bei welchem eine obere und eine untere Pumpkammerwandung vorgesehen ist, wobei weiter auch die untere Pumpkammerwandung einfaltbar ist und einen inneren höheren und in seitlicher Richtung außen tieferen Bereich ausbilden kann. Das Rücklaufventil ist in einem sich in die Pumpkammer erstreckenden Fortsatz der oberen Pumpkammerwandung ausgebildet. Aus der WO 2007/104561 A2 ist ein Spender mit einer oberen Pumpkammerwandung bekannt, die mehrlagig ausgebildet ist. Die untere Pumpkammerwandung ist als massiv gespritztes Teil gebildet.
Weiter ist zum Stand der Technik auf die US 2005/0011913 A1 zu verweisen. Bei einer Verlagerung des Spenderkopfes in Richtung auf den Vorratsraum wird die Pumpkammer hierbei sogleich verkleinert.

### Zusammenfassung der Erfindung

Ausgehend von dem dargelegten Stand der Technik beschäftigt sich die Erfindung mit der Aufgabenstellung, einen vorteilhaften Spender anzugeben..

Diese Aufgabe ist zunächst beim Gegenstand des Anspruches 1 gelöst, wobei darauf abgestellt ist, dass die obere Pumpkammerwandung einen sich in Verlängerung eines Ausgabekanals entgegen einer Ausbringrichtung der Masse in die Pumpkammer erstreckenden Röhrchenabschnitt aufweist und dass dieser Röhrchenabschnitt durchmessermäßig angepasst ist an einem Innendurchmesser eines unteren rohrförmigen Abschnitts der unteren Pumpkammerwandung, so dass zwischen der unteren Pumpkammerwandung und dem Röhrchenabschnitt ein in Richtung des Einlassventils oder eines Vorratsraumes offener Ringraum gebildet ist oder sich im Zuge eines Pumpvorganges einstellt.

Eine Verringerung des Pumpkammervolumens kann allein oder in Kombination mit anderen Maßnahmen durch Einfalten einer Pumpkammerwandung, insbesondere der unteren Pumpkammerwandung erreicht sein. Die Einfaltung erfolgt insbesondere in Folge einer im Zuge der Pumpbewegung gegebenen Schleppmitnahme zumindest einer der Pumpkammerwandungen, bevorzugt der oberen Pumpkammerwandung, während die andere, insbesondere die untere Pumpkammerwandung zumindest in einem bevorzugt seitlich inneren Bereich eine geringere axiale Verlagerung erfährt als die obere Pumpkammerwandung.

Hieraus kann sich bei einer Pumpbewegung zum Austrag des Mediums eine signifikante Verringerung des Pumpkammervolumens im seitlich inneren Bereich der Pumpkammer ergeben.

Die Anbindung der unteren Pumpkammerwandung an die obere Pumpkammerwandung kann, wie auch bevorzugt, in einem seitlich äußeren Bereich der unteren Pumpkammerwandung gegeben sein. Bei einer Pumpbewegung kann über diese Verbindung die untere Pumpkammerwandung in dem seitlich äußeren Bereich über einen axial größeren Weg verlagerbar sein als im seitlich inneren Bereich, was eine entsprechende, ggf. partielle Einfaltung der unteren Pumpkammerwandung zur Folge hat.

Die Pumpkammer, so weiter auch die obere und/oder untere Pumpkammerwandung, kann rotationssymmetrisch zu der geometrischen Achse des Spenders ausgebildet sein. In diesem Fall ergibt sich die seitliche Richtung in radialer Richtung.

Eine Oberfläche der unteren Pumpkammerwandung, bevorzugt die in das Innere der Pumpkammer gerichtete Oberfläche der unteren Pumpkammerwandung, kann durch vorgeformte Erhebungen und Vertiefungen zerklüftet sein. Hieraus kann sich eine vorgegebene Einfaltung der unteren Pumpkammerwandung bei Pumpbetätigung ergeben.

Die Pumpkammerwandungen können aus einem Kunststoffwerkstoff bestehen, der hochgradig barrieredicht ist, auch hinsichtlich der oberen Pumpkammerwandung beispielsweise mehrlagig ist. Neben einer EVOH-Lagekönnen die Pumpkammerwandungen eine Beschichtung aufweisen, beispielsweise Siliziumoxyd- oder Siliziumdioxyd-Beschichtung, und/ oder, bei mehrlagiger Ausbildung gegebenenfalls auch nur hinsichtlich einer oder mehrerer Lagen, aus einem Werkstoff wie PET, PBT oder PA besteht.

Es ist zufolge der vorgeschlagenen Ausgestaltung ein Spender angegeben, der zumindest im Bereich der Pumpkammer barrieredicht insbesondere gegen Sauerstoff ausgebildet ist, darüber hinaus oder alternativ auch barrieredicht bspw. gegen Wasserdampf und/oder UV-Licht.

Die niedergedrückte Stellung kann, wie bevorzugt, die Masse-Ausgabestellung sein. Entsprechend erfolgt eine Belüftung des die Masse bevorratenden Raumes bevorzugt im Zuge des Masseaustrages aus der Pumpkammer. Hierzu ist ein im Zuge der Pumpbewegung mitgeschlepptes Verschlussteil vorgesehen, nämlich der Kolben, welcher die Belüftungsöffnung wechselweise öffnet und schließt. Auch kann im Zuge der Pumpbewegung unmittelbar oder mittelbar durch den verlagerbaren Spenderkopf ein Verschlussteil, bspw. eine Klappe, in eine die Belüftungsöffnung schließende Stellung und zurück verlagert, bspw. schwenkverlagert werden.

Das Verschlussteil kann in weiterer Ausgestaltung in eine Stellung, bspw. die Belüftungsöffnung-Offenstellung federbelastet sein, wozu eine gesonderte Feder vorgesehen sein kann oder die Federkraft (allein) aus dem Verschlussteil-Material resultiert (bspw. bei Herstellung des Verschlussteiles aus einem elastisch rückstellfähigen Kunststoffmaterial).

Die Pumpkammer kann ein Ein- und ein Auslassventil aufweisen. Diese öffnen und schließen druckabhängig bevorzugt wechselseitig im Zuge der Pumpbewegung.

Auch kann die untere Pumpkammerwandung bei Verformung eine eigene elastische Rückstellkraft entwickeln. Diese Rückstellkraft kann allein aus dem Wandungsmaterial resultieren und auch unterstützt sein durch Zerklüftung der Oberfläche der unteren Pumpkammerwandung. Die Zerklüftung kann sich - ausgehend von einer quer zur Gehäuseachse verlaufenden Ebene - durch Vor- und Rücksprünge ergeben. Die Rückstellkraft wirkt in Richtung auf die hochgefahrene Stellung des Spenderkopfes und somit bevorzugt in Richtung auf eine Grundstellung der Pumpkammer, in welcher diese ein Maximalvolumen erreicht.

Gegebenenfalls zusätzlich kann eine die untere Pumpkammerwandung in eine Ausgangsstellung vorspannende Feder vorgesehen sein. Es kann sich hierbei um eine übliche Metallfeder, insbesondere Zylinderfeder handeln, die sich einerends auf einem nicht verlagerbaren Abschnitt des Spenders abstützt und andernends die Pumpkammer, insbesondere die untere Pumpkammerwandung in Richtung auf die Ausgangsstellung belastet. Alternativ kann die Feder auch aus einem Kunststoffwerkstoff bestehen, beispielsweise hergestellt im Kunststoffspritzverfahren.

Die Feder kann darüber hinaus gesondert in dem Spender gehaltert sein. Alternativ kann die Feder, insbesondere bei Herstellung aus einem Kunststoffwerkstoff, an einem Teilabschnitt des Spenders angespritzt sein oder einstückig mit diesem ausgebildet sein, insbesondere an einem im Zuge des Pumpvorganges nicht verlagerbaren Spenderabschnitt.

Das Ein- und/oder Auslassventil kann durch einen zweiten Kunststoffwerkstoff und bevorzugt im Zwei-Komponenten-Spritzverfahren hergestellt sein. Die Ventile können so bspw. im Zwei-Komponenten-Spritzverfahren in Teile des Spenderkopfes eingespritzt sein.

In einer Ausgestaltung kann das Ein- und/oder Auslassventil formschlüssig in einem durch einen ersten Kunststoffwerkstoff ausgebildeten Bereich aufgenommen sein. So kann weiter das Einlassventil im Bereich der unteren Pumpkammerwandung eingespritzt sein und das Auslassventil im Bereich der oberen Pumpkammerwandung, hier jeweils im Bereich der Durchtrittsöffnungen zum Einströmen von Masse in die Pumpkammer sowie zum Ausströmen der Masse aus der Pumpkammer.

Die untere Pumpkammerwandung kann zusätzlich zu dem unteren rohrförmigen Abschnitt einen oberseitigen rohrförmigen Abschnitt aufweisen, wobei der unterseitige rohrförmige Abschnitt in einem Längsquerschnitt eine seitliche Erstreckung aufweist, die ein Zehntel oder mehr, bis hin zu sieben Zehntel geringer ist als die seitliche Erstreckung des oberseitigen rohrförmigen Abschnittes. Bei einer rotationssymmetrischen Ausgestaltung der Pumpkammer kann so der Durchmesser eines unterseitigen rohrförmigen Abschnittes bspw. 3/10 bis hin zu beispielsweise 9/10 des Durchmessers des oberseitigen rohrförmigen Abschnittes entsprechen.

Das Auslassventil kann auch allein durch Reibung beispielsweise im Bereich eines Ausgaberöhrchens eingesetzt und gehalten sein. Bei Anordnung eines Nachlaufkolbens im Vorratsbehältnis kann auch nur ein Auslassventil vorgesehen sein.

Die rohrförmigen Abschnitte gehen in einer bevorzugten Ausgestaltung durch einen sich im Wesentlichen nur seitlich erstreckenden Faltabschnitt ineinander über. Der Faltabschnitt kann sich in einer Ausgangsstellung der unteren Pumpkammerwandung, welche Ausgangsstellung bevorzugt bei hochgefahrener Stellung des Spenderkopfes erreicht ist, im Wesentlichen (mit Bezug auf einen Längsquerschnitt durch den Spender) in radialer Richtung erstrecken, das heißt in einer Ebene quergerichtet zur eingangs beschriebenen Achse.

Jedenfalls der untere rohrförmige Abschnitt kann zylinderförmig ausgebildet sein. Auch kann der obere rohrförmige Abschnitt derart gestaltet sein.

Die obere Pumpkammerwandung weist einen sich entgegen der Ausbringrichtung der Masse in die Pumpkammer erstreckenden Röhrchenabschnitt auf. Auch ist dieser Röhrchenabschnitt durchmessermäßig angepasst an einen Innendurchmesser des unteren rohrförmigen Abschnitts der unteren Pumpkammerwandung.

So ist zwischen der unteren Pumpkammerwandung und dem Röhrchenabschnitt ein in Richtung des Einlassventils oder eines Vorratsraumes offener Ringraum gebildet oder stellt sich im Zuge des Pumpvorganges ein.

Durch die Pumpbewegung zwischen einer hochgefahrenen und einer niedergedrückten Stellung kann eine Belüftungsöffnung des Vorratsraumes öffen- bzw. schließbar sein. Bevorzugt ist die Belüftungsöffnung in der niedergedrückten Stellung geöffnet, welche niedergedrückte Stellung der Masse-Ausgabestellung bevorzugt entspricht. Die Belüftungsöffnung bietet einen Druckausgleich insbesondere zwischen dem Masse-Vorratsraum und der Umgebung.

So kann ein Verschlussteil für die Belüftungsöffnung vorgesehen sein. Dieses kann mit der unteren Pumpkammerwandung und/oder einem Halterungsbereich des Einlassventiles bewegungsgekoppelt sein. Das Verschlussteil kann so im Zuge der Pumpbewegung zumindest über einen Teilweg mitgeschleppt sein. Die Bewegung des Verschlussteiles kann entlang der geometrischen Spenderachse erfolgen.

Das Einlassventil und/oder ein Halterungsbereich für das Einlassventil können im Zuge einer Pumpbewegung bewegbar sein, so insbesondere zwischen einer niedergedrückten und einer hochgefahrenen Stellung.

In einer bevorzugten Ausgestaltung kann das Verschlussteil ein, ein oder mehrere umlaufende Dichtlippen aufweisender Kolben sein. Die Dichtlippen dienen hierbei bevorzugt zur Abdichtung des Vorratsraumes gegenüber der Umgebung in einer Pumpstellung, insbesondere in der hochgefahrenen Stellung. Die Dichtlippen wirken bevorzugt mit nicht verlagerbaren Bereichen des Spenders zusammen.

Der bevorzugt aus einem Gummi- oder TPE-Material bestehende, das Verschlussteil bildende Kolben kann an der unteren Pumpkammerwandung, bevorzugt an deren unterem rohrförmigen Abschnitt, außenseitig gehaltert, bspw. rastgehaltert sein. Eine Axialverlagerung der gesamten Pumpkammer und somit auch zumindest des bevorzugt zentralen unteren rohrförmigen Abschnittes der unteren Pumpkammerwandung führt entsprechend zu einem Mitschleppen des Kolbens, bevorzugt in die Belüftungsstellung des Vorratsraumes bzw. in die Belüftungsöffnung-Schließstellung.

Zudem kann der Spender einen topfartigen Aufnahmekörper aufweisen, in welchem die Pumpkammer aufgenommen ist. Die Topföffnung des Aufnahmekörpers, kann, wie bevorzugt, entgegen der üblichen Betätigungsrichtung des Spenderkopfes gerichtet sein.

Der Kolben kann die untere Pumpkammerwandung insbesondere zufolge Verrastung des Kolbens mit dem unteren rohrförmigen Abschnitt der unteren Pumpkammerwandung in dem Aufnahmekörper insbesondere axial, darüber hinaus gegebenenfalls auch in Querrichtung hierzu führen.

Die vor- und nachstehend angegebenen Bereiche bzw. Wertebereiche oder Mehrfachbereiche schließen hinsichtlich der Offenbarung auch sämtliche Zwischenwerte ein, insbesondere in Ein-Zehntel-Schritten der jeweiligen Dimension, gegebenenfalls also auch dimensionslos. Beispielsweise beinhaltet die Angabe ein Zehntel bis sieben Zehntel auch die Offenbarung von elf Hundertstel bis sieben Zehntel, ein Zehntel bis neunundsechzig Hundertstel, elf Hundertstel bis neunundsechzig Hundertstel, etc.. Die Offenbarung kann einerseits zur Eingrenzung einer genannten Bereichsgrenze von unten und/oder oben, alternativ oder ergänzend aber zur Offenbarung eines oder mehrerer singulärer Werte aus einem jeweiligen angegebenen Bereich liegen.

### Kurze Beschreibung der Zeichnungen

Nachstehend ist die Erfindung anhand der beigefügten Zeichnung erläutert, die aber lediglich Ausführungsbeispiele darstellt. Ein Teil, das nur bezogen auf eines der Ausführungsbeispiele erläutert ist und bei einem weiteren Ausführungsbeispiel aufgrund der dort herausgestellten Besonderheit nicht durch ein anderes Teil ersetzt ist, ist damit auch für dieses weitere Ausführungsbeispiel als jedenfalls mögliches vorhandenes Teil beschrieben. Auf der Zeichnung zeigt:
- Fig. 1: einen an einem Vorratsbehältnis angeordneten Spender in perspektivischer Darstellung;
- Fig. 2: den Spender in perspektivischer Einzeldarstellung, eine verriegelte Nichtbenutzungsstellung des Spenderkopfes betreffend;
- Fig. 3: eine der Figur 2 entsprechende Darstellung, die entriegelte Nutzungsstellung des Spenderkopfes betreffend,
- Fig. 4: den Spenderkopf der ersten Ausführungsform in einem Längsschnitt, betreffend eine hochgefahrene Stellung des Spenderkopfes;
- Fig. 5: eine Folgedarstellung zu Fig. 4 im Zuge einer Verlagerung des Spenderkopfes in Richtung auf eine niedergedrückte Stellung, eine Zwischenstellung betreffend;
- Fig. 6: eine gegenüber den Darstellungen in den Fig. 4 und 5 um 90° um eine Spenderkopf-Längsachse versetzte Längsquerschnittdarstellung, die vollständig niedergedrückte Stellung des Spenderkopfes betreffend;
- Fig. 7: die hochgefahrene Stellung des Spenderkopfes nach Durchführung einer Pumpbewegung in einer Schnittdarstellung gemäß Fig. 6;
- Fig. 8: eine perspektivische Längsquerschnitt-Darstellung durch den Spenderkopf der ersten Ausführungsform;
- Fig. 9: eine der Fig. 8 entsprechende Darstellung, jedoch eine zweite Ausführungsform des Spenderkopfes betreffend und
- Fig. 10: eine weitere der Fig. 8 entsprechende Darstellung, betreffend einen Spenderkopf in einer dritten Ausführungsform.

### Beschreibung der Ausführungsformen

Dargestellt und beschrieben ist ein Spender 1 für insbesondere flüssige bis pastöse Massen.

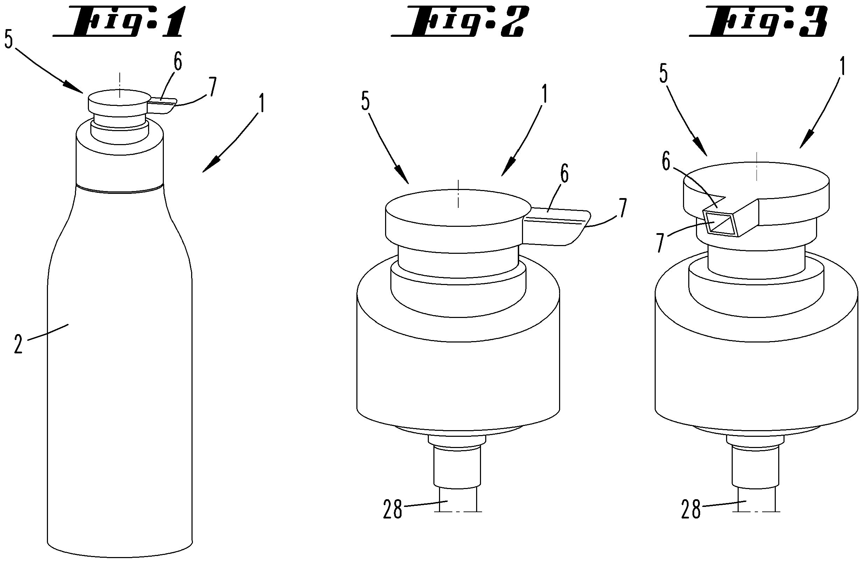

Der Spender 1 ist gemäß der in den Figuren 1 bis 9 dargestellten Ausführungsformen anordbar an ein Vorratsbehältnis 2 mit einem Vorratsraum 3.

Letzterer ist in diesen Ausführungsformen unmittelbar durch die Behältniswandung des Vorratsbehältnisses 2 begrenzt und gegeben.

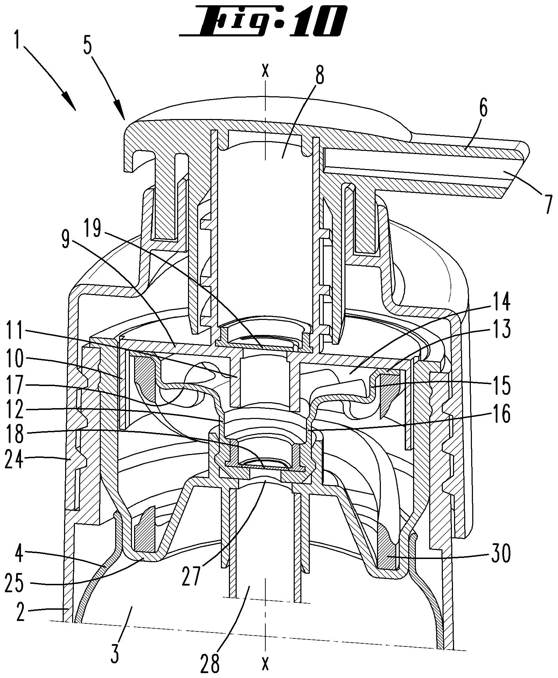

Alternativ kann gemäß der Darstellung in Figur 10 in dem Vorratsbehältnis 2 ein komprimierbarer Beutel 4 vorgesehen sein, welcher den Vorratsraum 3 bildet.

Der Spender 1 weist einen verlagerbaren Spenderkopf 5 auf. Die Verlagerbarkeit ist zur Erreichung einer Pumpbewegung entlang einer geometrischen Achse x gegeben, die bei üblicher Handhabung des Spenders 1 vertikal ausgerichtet ist und den Spenderkopf 5 mittig durchsetzt.

Im Wesentlichen ist der Spenderkopf 5, weiter der gesamte Spender 1 rotationssymmetrisch zur Achse x ausgebildet, mit Ausnahme einer zu der Achse x im Wesentlichen radial ausgerichteten Ausgabetülle 6 mit einer Ausgabeöffnung 7.

Der Spenderkopf 5 ist gemäß den Darstellungen in den Figuren 2 und 3 aus einer Verriegelungsstellung gemäß Figur 2, in welcher keine Pumpbewegung durchgeführt werden kann, in eine Nutzungsstellung gemäß Figur 3 drehverlagerbar um die Achse x. Aus dieser Stellung gemäß Figur 3 heraus kann eine Pumpbewegung und somit eine Masseausgabe durch niederdrücken des Spenderkopfes 5 und zurückfahren desselben in die Ausgangsposition erfolgen.

Koaxial zur Achse x ist in dem Spenderkopf 5 ein Ausgabekanal 8 ausgebildet. Dieser mündet einerends in die Ausgabetülle 6.

Dieser Mündung gegenüberliegend ist die Wandung des Ausgabekanals 8 bspw. einstückig und materialeinheitlich im Kunststoff-Spritzverfahren hergestellt oder über eine Steckausbildung mit einer oberen Pumpkammerwandung 9 verbunden.

Die obere Pumpkammerwandung 9 erstreckt sich im Wesentlichen tellerartig in einer Horizontalebene bei vertikaler Ausrichtung der Achse x.

Umlaufend entlang des Randes der Pumpkammerwandung 9 ist unterseitig der oberen Pumpkammerwandung 9 ein Kragen 10 angeformt.

In Verlängerung des Ausgabekanales 8, demgegenüber bevorzugt mit einem verringerten Durchmesser, erstreckt sich unterseitig der oberen Pumpkammerwandung 9, umgeben vom Kragen 10, ein einstückig mit der oberen Pumpkammerwandung 9 ausgebildeter Röhrchenabschnitt 11.

Unterseitig, den Röhrchenabschnitt 11 im Wesentlichen umgebend, ist an der oberen Pumpkammerwandung 9 eine untere Pumpkammerwandung 12 befestigt, insbesondere über einen Radialkragen 13. Die untere Pumpkammerwandung 12 ist insgesamt im Wesentlichen topfartig ausgebildet, mit einem zentralen eingesenkten Bereich.

Hierbei kann es sich um eine einteilige Ausbildung von oberer und unterer Pumpkammerwandung 9,12 handeln. Bevorzugt ist diesbezüglich eine Verbindung durch Verschweißen oder Verkleben der aufeinander zugewandten Flächen von Radialkragen 13 und oberer Pumpkammerwandung 9.

Durch die den Pumpkammerwandungen 9 und 12 begrenzt ergibt sich eine Pumpkammer 14.

Die untere Pumpkammerwandung 12 setzt sich im Wesentlichen zusammen aus einem oberseitigen rohrförmigen Abschnitt 15 und einem unterseitigen rohrförmigen Abschnitt 16.

Der obere rohrförmige Abschnitt 15 geht über in den Radialkragen 13.

Die beiden rorhrförmigen Abschnitte 15 und 16 gehen durch einen im Wesentlichen sich nur in Radialrichtung zur Achse x (insbesondere in der Grundstellung des Spenderkopfes 5) erstreckenden, tellerartigen Faltabschnitt 17 ineinander über.

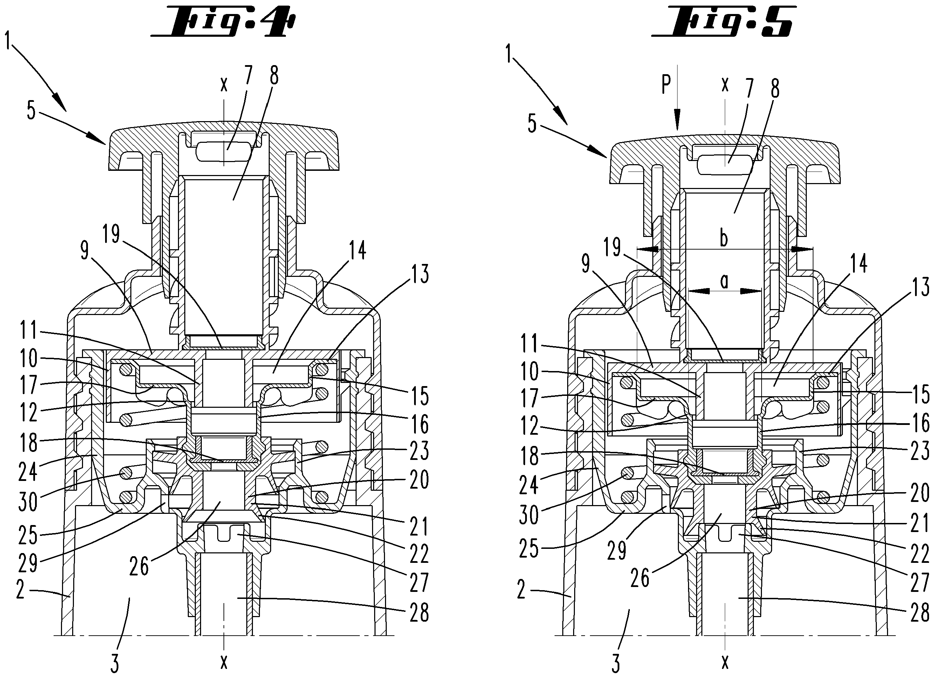

Der Faltabschnitt 17 ist insbesondere in der unbelasteten Grundstellung des Spenderkopfes 5 gemäß der Darstellung in Figur 4 axial beabstandet zu der oberen, scheibenartigen Pumpkammerwandung 9.

Der unterseitige rohrförmige Abschnitt 16 weist mit Bezug zu der Achse x einen Durchmesser a auf, der etwa einem Viertel bis einem Drittel des Durchmessers b des oberen rohrförmigen Abschnittes 15 entspricht.

Insbesondere der untere rohrförmige Abschnitt 16 ist insgesamt kreiszylinderförmig gestaltet. In diesen Abschnitt kann der Röhrchenabschnitt 11 bei Betätigung des Spenders 1 eintauchen.

Fußseitig des unteren rohrförmigen Abschnittes 16 ist ein Einlassventil 18 ausgebildet. Dieses kann beispielsweise im Zwei-Komponenten-Spritzverfahren hergestellt sein.

Insbesondere die untere Pumpkammerwandung 12, darüber hinaus bevorzugt auch die obere Pumpkammerwandung 9 sind bevorzugt aus einem hochgradig barrieredichten Kunststoffwerkstoff gefertigt. So kann diesbezüglich eine Mehrlagigkeit vorgesehen sein. Dies kann erreicht sein durch Barriere-Spritzgießen mit PP (Polypropylen) oder EVOH (Ethylen-Vinylalkohol-Copolymer) oder durch Ausbildung der Pumpkammerwandungen aus PET (Polyethylenterephthalat) oder PBT (Polybutylenterephthalat) oder PA (Polyamid). Darüber hinaus kann auch eine Beschichtung mit Siliziumoxyd oder Siliziumdioxyd vorgesehen sein, dies auch bei mehrlagiger Ausbildung der Wandung, bei welcher gegebenenfalls nur eine oder auch mehrere Lagen derart beschichtet sind.

Sowohl das Einlassventil 18 als auch ein im Übergang vom Röhrchenabschnitt 11 in den Ausgabekanal 8 vorgesehenes Auslassventil 19, welches bevorzugt ebenfalls im Zwei-Komponenten-Spritzverfahren hergestellt ist, sind insbesondere gegenüber den Pumpkammerwandungen aus einem anderen Kunststoffwerkstoff, insbesondere aus einem anderen Weichkunststoff gefertigt.

Das dem Ausgabekanal 8 abgewandte, fußseitige Ende des unteren rohrförmigen Abschnittes 16 der unteren Pumpkammerwandung 12 ist ausgebildet zur Rastfestlegung eines radial außen angeordneten Verschlussteiles 20. Das Verschlussteil 20 ist so bewegungsgekoppelt an der unteren Pumpkammerwandung 12 bzw. an dessen unteren rohrförmigen Abschnitt 16 festgelegt.

Das Verschlussteil 20 ist in Art eines Kolbens 21 ausgebildet, mit axial zueinander beabstandeten, im Wesentlichen nach radial außen gerichteten und umlaufenden Dichtlippen 22. Die beiden vorgesehenen Dichtlippen 22 erstrecken sich auf unterschiedlichen Radien.

Der Kolben 21 ist geführt in einem koaxial zur Achse x ausgerichteten Topfabschnitt 23. Die axialen Endstellungen können in diesem Bereich definiert sein, beispielsweise zufolge Anschlagen eines Kolbenabschnittes an entsprechenden Vorsprüngen des Topfabschnittes 23.

Der Topfabschnitt 23 ist Teil eines Aufnahmekörpers 24. Dieser ist insgesamt topfartig ausgebildet, mit einem Topfboden 25, der insbesondere den Vorratsraum 3 vom Spenderkopf 5 trennt.

An dem Topfboden 25 ist bevorzugt in axialer Verlängerung zu dem Ausgabekanal 8 und dem Röhrchenabschnitt 11, weiter in axialer Verlängerung zu einer zentralen Kolbenöffnung 26, mit einer Durchtrittsöffnung 27 versehen, an welcher sich unterseitig ein Ansaugröhrchen 28 anschließen kann. Dieses taucht in die Masse ein.

Mit Bezug auf eine Spenderkopf-Grundstellung gemäß Figur 4 ist zwischen den Dichtlippen 22 des Kolbens 21 im Bereich des Topfbodens 25 eine Belüftungsöffnung 29 ausgebildet. Diese ist generell geöffnet hin zum Vorratsraum 3.

Die untere Pumpkammerwandung 12 ist im Bereich ihres Radialkragens 13 beaufschlagt von einer Feder 30. Die Feder 30 stützt sich andernends auf dem Topfboden 25 des Aufnahmekörpers 24 ab, in welchem Aufnahmekörper 24 insgesamt die Pumpkammer 14 aufgenommen ist. Die obere Pumpkammerwandung 9 kann durch die umlaufende Wandung des Aufnahmekörpers 24 geführt sein. Auch kann die Wandung des Aufnahmekörpers 24 in Zusammenwirkung mit dem Kragen der oberen Pumpkammerwandung 9 eine Anschlagbegrenzung zumindest nach oben in die hochgefahrene Stellung des Spenderkopfes anbieten.

Über die Federbeaufschlagung der unteren Pumpkammerwandung 12 ist auch die obere Pumpkammerwandung 9 und somit der gesamte Spenderkopf 5 in Richtung auf die hochgefahrene Stellung belastet. Eine Pumpbewegung, das heißt ein Niederdrücken des Spenderkopfes 5 zur Ausgabe von Masse, erfolgt gegen die Kraft der Feder 30. Die Feder 30 kann gemäß der ersten Ausführungsform eine Metallfeder, insbesondere Zylinderfeder sein.

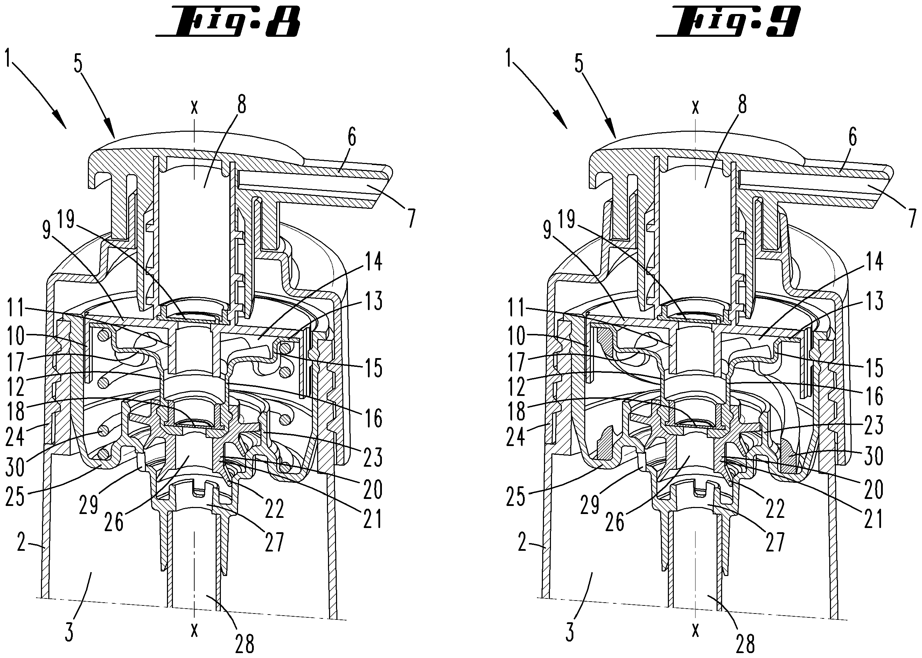

Figur 9 zeigt eine auf der ersten Ausführungsform basierende zweite Ausführungsform mit einer Kunststofffeder, beispielsweise hergestellt im Kunststoffspritzverfahren, welche wendelartig die Achse x umgebend sich vom Topfboden 25 bis zur Anlage an den Radialkragen 13 der unteren Pumpkammerwandung 12 erstreckt.

Zwischen der unteren Pumpkammerwandung 12 bzw. dessen unteren rohrförmigen Abschnitt 16 und dem Röhrchenabschnitt 11 ergibt sich ein in Richtung des Einlassventils 18 offener Ringraum 31.

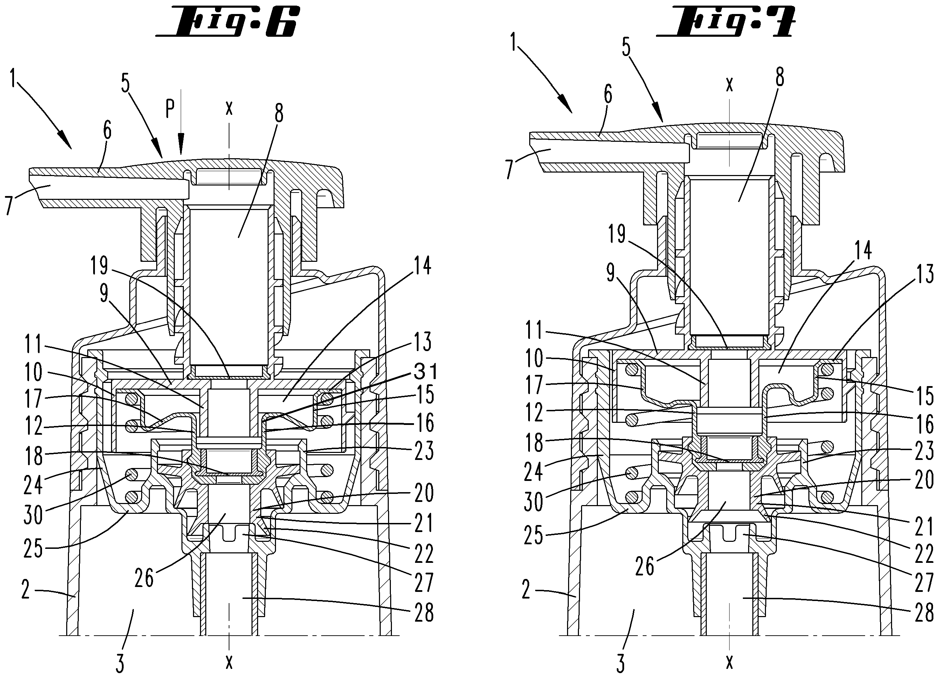

Zur Ausgabe von Masse aus dem Vorratsraum 3 wird der Spenderkopf 5 aus einer hochgefahrenen Stellung gemäß Figur 4 in eine niedergedrückte Stellung gemäß Figur 6 verbracht. Die hierfür notwendige Druckbetätigung entgegen der Kraft der Feder 30 ist durch den Pfeil P dargestellt.

Mit axialer Verlagerung des Spenderkopfes 5 in Richtung auf das Vorratsbehältnis 2 wird die Pumpkammer 14 zunächst unbeeinflusst mitgeschleppt, bis in eine Stellung gemäß Figur 5, in welcher der an der unteren Pumpkammerwandung 12 rastfestgelegte Kolben 21 anschlagbegrenzt eine Endstellung einnimmt, in welcher die Belüftungsöffnung 29 freigegeben ist.

Die weitere Axialverlagerung des Spenderkopfes 5 führt zufolge der hierbei sich ergebenden Verlagerung von oberer Pumpkammerwandung 9 und dem daran befestigten oberen rohrförmigen Abschnitt 15 relativ zu dem feststehenden unteren rohrförmigen Abschnitt 16 zu einer Einfaltung des Faltabschnittes 17 (vgl. Figur 6). Der radial innere Bereich der unteren Pumpkammerwandung 12 ist in dieser Stellung geringer beabstandet zu der oberen Pumpkammerwandung 9 als ein radial äußerer Bereich.

Bei der hierbei erfolgenden Masseausgabe kann es zu einem Nachschusseffekt kommen, da annähernd erst zum Schluss der Spenderkopfverlagerung ein Kollabieren der unteren Pumpkammerwandung 12 eintreten kann und hierdurch gegebenenfalls nochmals Masse nachgestoßen werden kann.

Die untere Pumpkammerwandung 12 kann zufolge dieser Einfaltung eine eigene elastische Rückstellkraft aufbauen, gegebenenfalls unterstützend zu der Feder 30.

Bei der in Figur 10 dargestellten Ausbildung, bei welcher ein Beutel 4 in dem Behältnis 2 angeordnet ist, entfällt insbesondere die Belüftungsöffnung. Entsprechend kann auch auf das Verschlussteil 20 bzw. den Kolben 21 verzichtet werden. Der untere rohrförmige Abschnitt 16 der unteren Pumpkammerwandung 12 ist in dieser Ausführungsform unmittelbar rastgehaltert an dem Topfboden 25. Mit Einsetzen der Abwärtsverlagerung des Spenderkopfes 5 zur Masseausgabe tritt unmittelbar eine Relativverlagerung zwischen dem oberen rohrförmigen Abschnitt 15 und dem unteren rohrförmigen Abschnitt 16 der unteren Pumpkammerwandung 12 ein.

**Liste der Bezugszeichen**

| | | | |
|---|---|---|---|
| 1 | Spender | 27 | Durchtrittsöffnung |
| 2 | Vorratsbehältnis | 28 | Ansaugröhrchen |
| 3 | Vorratsraum | 29 | Belüftungsöffnung |
| 4 | Beutel | 30 | Feder |
| 5 | Spenderkopf | 31 | Ringraum |
| 6 | Ausgabetülle | | |
| 7 | Ausgabeöffnung | a | Durchmesser |
| 8 | Ausgabekanal | b | Durchmesser |
| 9 | obere Pumpkammerwandung | x | Achse |
| 10 | Kragen | | |
| 11 | Röhrchenabschnitt | P | Pfeil |
| 12 | untere Pumpkammerwandung | | |
| 13 | Radialkragen | | |
| 14 | Pumpkammer | | |
| 15 | oberer rohrförmiger Abschnitt | | |
| 16 | unterer rohrförmiger Abschnitt | | |
| 17 | Faltabschnitt | | |
| 18 | Einlassventil | | |
| 19 | Auslass ventil | | |
| 20 | Verschlussteil | | |
| 21 | Kolben | | |
| 22 | Dichtlippe | | |
| 23 | Topfabschnitt | | |
| 24 | Aufnahmekörper | | |
| 25 | Topfboden | | |
| 26 | Kolbenöffnung | | |

## Patentansprüche

1. Spender (1) für insbesondere flüssige bis pastöse Massen, mit einer Pumpkammer (14), die bezogen auf eine Pumpbewegung bei einer üblichen Handhabung des Spenders (1), bei welcher die Pumpbewegung vertikal gerichtet ist, eine obere (9) und eine untere Pumpkammerwandung (12) aufweist, wobei die untere (12) und obere Pumpkammerwandung (9) bezogen auf eine vertikal mittig die Pumpkammer (14) durchsetzende geometrische Achse (x) eine Erstreckung von seitlich innen nach seitlich außen aufweisen, wobei weiter die untere Pumpkammerwandung (12) mit der oberen Pumpkammerwandung (9) durch einteilige Ausbildung, Verschweißen oder Verkleben verbunden ist und sich die untere Pumpkammerwandung (12) bei einer Betätigung durch Einfalten unter Ausbildung eines in seitlicher Richtung innen höheren und eines in seitlicher Richtung außen tieferen Bereiches zur Ausbringung von Masse verformt, **dadurch gekennzeichnet, dass** die obere Pumpkammerwandung (9) einen sich in Verlängerung eines Ausgabekanals (8) entgegen einer Ausbringrichtung der Masse in die Pumpkammer (14) erstreckenden Röhrchenabschnitt (11) aufweist und dass dieser Röhrchenabschnitt (11) durchmessermäßig angepasst ist an einen Innendurchmesser eines unteren rohrförmigen Abschnitts (16) der unteren Pumpkammerwandung (12), so dass zwischen der unteren Pumpkammerwandung (12) und dem Röhrchenabschnitt (11) ein in Richtung eines Einlassventils oder eines Vorratsraumes offener Ringraum (31) gebildet ist oder sich im Zuge eines Pumpvorganges einstellt.

2. Spender (1) nach einem Anspruch 1, **dadurch gekennzeichnet, dass** die Pumpkammer (14) ein Ein- (18) und ein Auslassventil (19) aufweist.

3. Spender (1) nach Anspruch 2, **dadurch gekennzeichnet, dass** das Ein- (18) und/oder Auslassventil (19) durch einen zweiten Kunststoffwerkstoff und bevorzugt im Zwei-Komponenten-Spritzverfahren hergestellt ist.

4. Spender (1) nach einem der vorangehenden Ansprüche, **dadurch gekennzeichnet, dass** die untere Pumpkammerwandung (12) bei Verformung eine eigene elastische Rückstellkraft entwickelt.

5. Spender (1) nach einem der vorangehenden Ansprüche, **dadurch gekennzeichnet, dass**, eine die untere Pumpkammerwandung (12) in eine Ausgangsstellung vorspannende Feder (30) vorgesehen ist.

6. Spender (1) nach einem der Ansprüche 3 bis 5, wenn abhängig vom Anspruch 2, **dadurch gekennzeichnet, dass** das Ein- (18) und/oder Auslassventil (19) formschlüssig in einem durch einen ersten Kunststoffwerkstoff ausgebildeten Bereich aufgenommen ist.

7. Spender (1) nach einem der vorangehenden Ansprüche, **dadurch gekennzeichnet, dass** die untere Pumpkammerwandung (12) einen oberseitigen rohrförmigen Abschnitt (15) aufweist, wobei der unterseitige rohrförmige Abschnitt (16) in einem Längsquerschnitt eine seitliche Erstreckung aufweist, die ein Zehntel oder mehr, bis hin zu sieben Zehntel geringer ist als die seitliche Erstreckung des oberseitigen rohrförmigen Abschnittes (15).

8. Spender (1) nach Anspruch 7, **dadurch gekennzeichnet, dass** die rohrförmigen Abschnitte (15, 16) durch einen sich im Wesentlichen nur seitlich erstreckenden Faltabschnitt (17) ineinander übergehen.

9. Spender (1) nach einem der Ansprüche 7 oder 8, **dadurch gekennzeichnet, dass** jedenfalls der untere rohrförmige Abschnitt (16) zylinderförmig ist.

## Claims

1. Dispenser (1) in particular for liquid to pasty substances, comprising a pumping chamber (14) that has a top pumping chamber wall (9) and a bottom pumping chamber wall (12) in relation to a pumping movement when the dispenser (1) is handled normally, i.e. during a vertical pumping movement; the bottom (12) and top pumping chamber walls (9) extend from laterally inside to laterally outside in relation to a geometrical axis (x) running vertically through the center the pumping chamber (14), wherein, furthermore, the bottom pumping chamber wall (12) is joined to the bottom pumping chamber wall (9) by designing the two walls as a single piece, or by welding or gluing the two walls together and when the dispenser is actuated, the bottom pumping chamber wall (12) deforms by folding inward such that an elevated region is formed inside in the lateral direction and a lower region is formed outside in the lateral direction in order for substance to be dispensed, **characterized in that** the top pumping chamber wall (9) has a pipe section (11) extending against the direction of the substance's discharge into the pumping chamber (14) in an extension of the discharge channel (8) and that the diameter of this pipe section (11) is adapted to an inner diameter of a bottom tubular section (16) of the bottom pumping chamber wall (12) so that, between the bottom pumping chamber wall (12) and the pipe section (11), an annulus (31) is formed that is open in the direction of an inlet valve or a storage space or is set during the course of a pumping operation.

2. Dispenser (1) according to Claim 1, **characterized in that** the pumping chamber (14) has an inlet (18) and an outlet valve (19).

3. Dispenser (1) according to Claim 2, **characterized in that** the inlet (18) and/or outlet valve (19) is manufactured using a second plastic material and is preferably manufactured within the scope of a two-component injection-moulding method.

4. Dispenser (1) according to one of the preceding claims, **characterized in that** the bottom pumping chamber wall (12) develops an intrinsic elastic restoring force when deforming.

5. Dispenser (1) according to one of the preceding claims, **characterized in that** a spring (30) pretensioning the bottom pumping chamber wall (12) into an initial position is provided.

6. Dispenser 1 according to one of the Claims 3 to 5, in case of being dependent to claim 2, **characterized in that** the inlet (18) and/or outlet valve (19) is accommodated in a form-fitting manner within an area made by means of a first plastic material.

7. Dispenser (1) according to one of the preceding claims, **characterized in that** the bottom pumping chamber wall (12) has a topside tubular section (15), wherein the bottom-side tubular section (16) has a lateral extension in a longitudinal cross-section, which is a tenth less or more than a tenth less, all the way to a seventh less than the lateral extension of the topside tubular section (15) .

8. Dispenser (1) according to Claim 7, **characterized in that** the tubular sections (15, 16) merge into each other via a folding section (17), which primarily extends only in a lateral manner.

9. Dispenser (1) according to one of the Claims 7 or 8, **characterized in that** the bottom tubular section (16) is, in any case, cylindrical.

## Revendications

1. Distributeur (1) pour, en particulier, des produits liquides à pâteux, comprenant une chambre de pompage (14) qui, par rapport à un mouvement de pompage lors d'une manipulation usuelle du distributeur (1) dans laquelle le mouvement de pompage est orienté verticalement, présente une paroi supérieure de chambre de pompage (9) et une paroi inférieure de chambre de pompage (12), dans lequel la paroi inférieure de chambre de pompage (12) et la paroi supérieure de chambre de pompage (9) présentent, par rapport à un axe géométrique (x) passant verticalement au centre de la chambre de pompage (14), une extension s'étendant latéralement de l'intérieur vers l'extérieur, dans lequel en outre la paroi inférieure de chambre de pompage (12) est reliée par construction monobloc, soudage ou collage à la paroi supérieure de chambre de pompage (9) et, lors de l'actionnement, la paroi inférieure de chambre de pompage (12) se déforme par pliage en formant une zone plus haute dans la direction latérale vers l'intérieur et une zone plus basse dans la direction latérale vers l'extérieur pour extraire du produit, **caractérisé en ce que** la paroi supérieure de chambre de pompage (9) comprend une partie tubulaire (11) s'étendant dans la chambre de pompage (14) et qui prolonge un canal de distribution (8) à l'encontre d'une direction de distribution de produit, et **en ce que** cette partie tubulaire (11) est adaptée en diamètre à un diamètre intérieur d'une partie tubulaire inférieure (16) de la paroi inférieure de chambre de pompage (12) de manière à former ou se faire former au cours d'une opération de pompage, entre la paroi inférieure de chambre de pompage (12) et la partie tubulaire (11), un espace annulaire (31) ouvert dans la direction d'une valve d'admission ou d'un espace formant réservoir.

2. Distributeur (1) selon la revendication 1, **caractérisé en ce que** la chambre de pompage (14) présente une valve d'admission (18) et une valve de sortie (19).

3. Distributeur (1) selon la revendication 2, **caractérisé en ce que** la valve d'admission (18) et/ou la valve de sortie (19) sont réalisées par une deuxième matière plastique et de préférence par le procédé de moulage par injection à deux composants.

4. Distributeur (1) selon l'une des revendications précédentes, **caractérisé en ce que** la paroi inférieure de chambre de pompage (12) développe lors de sa déformation un effort de rappel élastique propre.

5. Distributeur (1) selon l'une des revendications précédentes, **caractérisé en ce qu'**il est prévu un ressort (30) qui sollicite la paroi inférieure de chambre de pompage (12) dans une position initiale.

6. Distributeur (1) selon l'une des revendications 3 à 5, en dépendance de la revendication 2, **caractérisé en ce que** la valve d'entrée (18) et/ou la valve de sortie (19) sont reçues par coopération de forme dans une zone formée par une première matière plastique.

7. Distributeur (1) selon l'une des revendications précédentes, **caractérisé en ce que** la paroi inférieure de chambre de pompage (12) présente une partie tubulaire supérieure (15), la partie tubulaire inférieure (16) ayant, dans une section longitudinale, une extension latérale qui est d'un dixième ou plus, et ce jusqu'à sept dixièmes, inférieure à l'extension latérale de la partie tubulaire supérieure (15).

8. Distributeur (1) selon la revendication 7, **caractérisé en ce que** les parties tubulaires (15, 16) se raccordent l'une à l'autre par une partie pliable (17) s'étendant sensiblement que de manière latérale.

9. Distributeur (1) selon l'une des revendications 7 ou 8, **caractérisé en ce qu'**au moins la partie tubulaire inférieure (16) est de forme cylindrique.
